# EUROPÄISCHE PATENTSCHRIFT

(11) **EP 2 989 551 B1**
(45) Veröffentlichungstag und Bekanntmachung des Hinweises auf die Patenterteilung: **12.04.2017**
(21) Anmeldenummer: 14725038.5
(22) Anmeldetag: 07.05.2014
(51) Int. Cl.: G06F 13/42

(54) **VERFAHREN UND VORRICHTUNG ZUR SERIELLEN DATENÜBERTRAGUNG ZWISCHEN EINEM BASISMODUL UND EINEM ERSTEN ERWEITERUNGSMODUL**
METHOD AND APPARATUS FOR SERIAL DATA TRANSMISSION BETWEEN A BASIC MODULE AND A FIRST EXPANSION MODULE
PROCÉDÉ ET DISPOSITIF DE TRANSMISSION EN SÉRIE DE DONNÉES ENTRE UN MODULE DE BASE ET UN PREMIER MODULE D'EXTENSION

(30) Priorität: 12.06.2013 DE 102013210968
(43) Veröffentlichungstag der Anmeldung: 02.03.2016
(73) Patentinhaber: Siemens Aktiengesellschaft, 80333 München (DE)
(72) Erfinder: MEIER, Matthias, 92284 Poppenricht (DE); BEYER, Stefan, 92263 Ebermannsdorf (DE); STAUFER, Helmut, 92729 Weiherhammer (DE)
(86) Internationale Anmeldenummer: PCT/EP2014/059280
(87) Internationale Veröffentlichungsnummer: WO 2014/198460

(56) Entgegenhaltungen:
- EP-A1- 2 570 931
- US-A1- 2007 293 266
- US-B1- 6 510 484

## Beschreibung

Die Erfindung bezieht sich auf ein Verfahren und eine Vorrichtung zur seriellen Datenübertragung zwischen einem Basismodul und einem Erweiterungsmodul. Das Basis- und Erweiterungsmodul dient insbesondere dem Ansteuern und/oder Überwachen eines Elektromotors.

Ein aus einem Basismodul und mindestens einem Erweiterungsmodul gebildetes System kommt insbesondere im Bereich der industriellen Automatisierungstechnik zum Einsatz. Das Basismodul (Grundgerät) ist hierbei insbesondere ein Überlastschutzgerät mit Steuerfunktion. Das mindestens eine Erweiterungsmodul ist beispielsweise ein Stromerfassungs-, ein Spannungsüberwachungs-, ein Bedien- und/oder ein Anzeigemodul. Mittels des Erweiterungsmoduls kann das Basismodul um mindestens eine Funktion, die des Erweiterungsmoduls, erweitert werden. Zur Kommunikation zwischen dem Basismodul und dem mindestens einen Erweiterungsmodul umfasst das Basismodul und das Erweiterungsmodul jeweils eine Systemschnittstelle, über welche eine serielle Datenübertragung zwischen dem Basismodul und dem mindestens einem Erweiterungsmodul ermöglicht wird. Die Systemschnittstelle weist vier Pins als Serial Peripheral Interface (kurz: SPI) und zwei Pins als Universal Asynchronous Receiver Transmitter (kurz: UART) Schnittstelle oder als Inter-Integrated Circuit (kurz: I²C) Schnittstelle auf.

Ein derartiges System ist beispielsweise das modular aufgebaute Motormanagementsystem "SIMOCODE pro" der Firma Siemens. Das modular aufgebaute Motormanagementsystem SIMOCODE pro ist für Motoren im Niederspannungsbereich ausgelegt und lässt sich über PROFIBUS oder PROFINET direkt an ein Automatisierungssystem anbinden. Es deckt die wichtigsten funktionellen Belange, einschließlich der sicherheitsgerichteten Abschaltung, zwischen dem Motorabzweig und dem Automatisierungssystem ab und vereint in nur einem kompakten System alle notwendigen Schutz-, Überwachungs-, Sicherheits- und Steuerfunktionen für den über den Motorabzweig gesteuerten Motor. Das modular aufgebaute Motormanagementsystem SIMOCODE pro umfasst ein Basismodul (Grundgerät), welches in Abhängigkeit der erwünschten Funktionalität des Motormanagementsystems mit Erweiterungsmodulen erweitert werden kann. Zur Kommunikation zwischen dem Basismodul und dem mindestens einen Erweiterungsmodul weisen die einzelnen Module jeweils eine oben beschriebene Systemschnittstelle auf.

Aufgabe ist es, die genannte Vorrichtung weiterzuentwickeln, so dass eine verbesserte Datenübertragung eines Datenpakets zwischen einem Basismodul und einem Erweiterungsmodul ermöglicht wird. Insbesondere sollen Datenpakete, welche größer als 10 Byte sind, verbessert zwischen dem Basismodul und dem Erweiterungsmodul übertragbar sein.

Es wird auf WO2005/083577 und US2007/0293266 verwiesen, welche Busanbindungen mit einer SPI- Schnittstelle und einer I2C-Schnittstelle oder einer UART-Schnittstelle offenbaren.

Die oben genannte Aufgabe wird gelöst durch ein Verfahren gemäß Anspruch 1, d.h. durch ein Verfahren zur seriellen Datenübertragung zwischen einem Basismodul und einem ersten Erweiterungsmodul, wobei das Basismodul und das erste Erweiterungsmodul jeweils eine erste Systemschnittstelle, welche vier Pins als Serial Peripheral Interface und zwei Pins als UART Schnittstelle oder als I²C Schnittstelle aufweist, umfasst, wobei die erste Systemschnittstelle des Basismoduls mit der ersten Systemschnittstelle des Erweiterungsmoduls verbunden ist und die Datenübertragung zwischen dem Basismodul und dem ersten Erweiterungsmodul über das Serial Peripheral Interface eine zyklische Datenübertragung und über die UART Schnittstelle oder I²C Schnittstelle eine azyklische Datenübertragung ist, wobei zum Austausch eines Datenpakets vom Basismodul zum ersten Erweiterungsmodul das Basismodul mittels mindestens eines Steuerbits in der zyklischen Datenübertragung mit dem ersten Erweiterungsmodul dem ersten Erweiterungsmodul anzeigt, dass über die azyklische Datenübertragung ein Datenpaket zum ersten Erweiterungsmodul übertragen wird, und anschließend das Datenpaket über die azyklische Datenübertragung zum ersten Erweiterungsmodul überträgt, und eine Vorrichtung gemäß Anspruch 10, d.h. durch ein System zur Durchführung eines Verfahrens nach einem der Ansprüche 1 bis 9, wobei das System das Basismodul und das erste Erweiterungsmodul umfasst.

Vorteilhafte Weiterbildungen der Erfindung sind in den abhängigen Ansprüchen 2 bis 9 angegeben.

Bei der Systemschnittstelle sind mindestens zwei Schnittstellen zu einer Gesamtschnittstelle zusammengefasst. Die Systemschnittstelle umfasst das SPI und die UART Schnittstelle und/oder die I²C Schnittstelle. Das SPI wird durch vier Pins der Systemschnittstelle realisiert. Die UART und/oder I²C Schnittstelle wird durch zwei weitere Pins der Systemschnittstelle realisiert.

Die einzelnen Module (Basismodul und Erweiterungsmodul) umfassen jeweils ein Kommunikationsmittel. Das Kommunikationsmittel dient dem Senden und Empfangen der einzelnen Daten über die Systemschnittstelle, d.h. über die vier Pins des Serial Peripheral Interfaces und der zwei Pins der UART oder I²C Schnittstelle.

Das System ist insbesondere ein Motormanagementsystem mittels welchem ein Elektromotor gesteuert werden kann. Mittels des Motormanagementsystems kann vorzugsweise ein Schaltgerät (z.B. ein Schütz), über welches der Versorgungstrang eines Elektromotors geführt ist, gesteuert werden.

Bei der Kommunikation der Module (Basismodul und Erweiterungsmodul) über das SPI handelt es sich um eine zyklische Kommunikation. Das Telegramm der zyklischen Kommunikation umfasst vorzugsweise maximal 31 Byte. Das zyklische Telegramm weist jeweils mindestens ein Steuerbit, mindestens ein Datenbyte und vorzugsweise ferner ein ID Byte (Identifikationsnummer), ein Baugruppenkennungsbyte und/oder ein CS Byte auf.

Mittels des Baugruppenkennungsbyte kann vorzugsweise gezielt ein Erweiterungsmodul des Systems adressiert werden.

Über das mindestens eine Steuerbit kann das Basismodul gezielt dem adressierten Erweiterungsmodul mitteilen, dass für das adressierte Erweiterungsmodul ein Datenpaket über die azyklische Datenübertragung übertragen wird. Das mindestens eine Steuerbit ist vorzugsweise ein Steuerbyte.

Bei dem CS Byte handelt es sich um eine 1-Byte Checksum, welche über das Telegramm (ohne dem CA-Byte) gebildet wird. Es ist ebenso eine 8-Bit CRC Checksum denkbar.

Bei der Kommunikation der Module (Basismodul und Erweiterungsmodul) über die UART oder I²C Schnittstelle handelt es sich um eine azyklische Kommunikation. Bei der Punkt zu Punkt Kommunikation der Module über die UART oder I²C Schnittstelle kann zwischen dem Basismodul und dem Erweiterungsmodul entweder die UART oder die I²C Kommunikation betrieben werden. Der Systembus über das SPI arbeitet parallel zur azyklischen Kommunikation zyklisch weiter. Vorzugsweise wird durch Senden eines charakteristischen ID-Bytes über den Systembus festgelegt, welche der möglichen Punkt zu Punkt Verbindungen (UART oder I²C) vom Basismodul aktiviert werden kann oder aktiviert ist.

Anhand des über die zyklische Datenübertragung übertragenen mindestens einen Steuerbits wird dem ersten Erweiterungsmodul angezeigt, dass über den azyklischen Datenkanal ein Datenpakt für das erste Erweiterungsmodul übertragen wird. Das erste Erweiterungsmodul kann somit ohne Beeinträchtigung der zyklischen Datenübertragung über den azyklischen Datenkanal die übertragenen Daten und somit das Datenpaket empfangen. Auf diese Weise können unter Beibehalten der Zykluszeit der zyklischen Datenübertragung über die azyklische Datenübertragung gezielt Daten vom Basismodul zu einem Erweiterungsmodul des Systems übertragen werden.

In einer vorteilhaften Ausführungsform der Erfindung dient das Basis- und Erweiterungsmodul dem Ansteuern und/oder Überwachen eines Elektromotors. Insbesondere für den Anlauf oder kurzzeitigen Betrieb des mittels des Basis- und Erweiterungsmodul angesteuerten und/oder überwachten Elektromotors kann es nötig sein größere Datenmengen zwischen dem Basismodul und dem Erweiterungsmodul zu übertragen.

Dadurch, dass größerer Datenpakte in der azyklischen Kommunikation übertragen werden, kann eine hohe Übertragungsgeschwindigkeit über das Serial Peripheral Interface (den Systembus) beibehalten werden. Eine Verlängerung der Zykluszeit der zyklischen Datenkommunikation ist nicht erforderlich.

In einer weiteren vorteilhaften Ausführungsform der Erfindung umfasst das Basismodul eine integrierte PROFIBUS- oder PROFINET-Schnittstelle. Dies ermöglicht eine standardisierte Einbindung des Basismoduls und des mit ihm verbundenen Erweiterungsmoduls in überlagerte Automatisierungssysteme. Das Basismodul umfasst vorzugsweise mindestens vier binäre Eingänge und mindestens drei monostabile Relaisausgänge. Das Basismodul ist vorzugsweise für die Versorgungsspannungen DC 24 Volt oder AC/DC 110 bis 240 Volt ausgelegt.

In einer weiteren vorteilhaften Ausführungsform der Erfindung ist das Erweiterungsmodul ein Bedienmodul, ein Digitalmodul, ein Erdschlussmodul, ein Temperaturmodul, ein Analogmodul oder eine Kombination aus einem dieser Module.

Das Bedienmodul dient der Steuerung des Motorabzweigs. Es kann beispielswiese in eine Schaltschranktür eingebaut werden, so dass sich der Motorabzweig direkt am Schaltschrank bedienen lässt. Die Systemschnittstelle bzw. eine zusätzliche analog ausgebildete Systemschnittstelle ist vorzugsweise frontseitig im Bedienmodul integriert. Über diese Systemschnittstelle wird vorzugsweise die Parametrierung und Diagnose des Bedienmoduls bzw. des Motormanagementsystems (Basismodul und Bedienmodul als Erweiterungsmodul) ermöglicht. Das Bedienmodul umfasst vorzugsweise Mittel zum Aufstecken eines Adressiersteckers oder Speichermoduls, so dass hierüber die Vergabe einer PROFIBUS-Adresse oder sogar die komplette Parametrierung des Motormanagementsystems ermöglicht wird. Um Messwerte, Betriebs- und Diagnosedaten direkt am Schaltschrank anzeigen zu können, umfasst das Bedienmodul vorzugsweise ein Anzeigeelement. Mittels Eingabemittel, z.B. Tastelemente, des Bedienmoduls können vorzugsweise Parameter wie Motornennstrom und/oder Grenzwerte des Motormanagementsystems direkt eingestellt werden.

Mittels des Digitalmoduls sind insbesondere zusätzliche Prozess-Signale ein- und/oder ausgebbar. Hierfür umfasst das Digitalmodul vorzugsweise bistabile Relaisausgänge, so dass der Schaltzustand der Relaisausgänge auch nach einem Ausfall der Versorgungsspannung beibehalten werden kann.

Das Erdschlussmodul ist derart ausgebildet, dass es mithilfe eines Summenstromwandlers eine Erdschlussüberwachung ermöglicht.

Parallel zum Thermistor-Motorschutz des Temperaturmoduls kann mithilfe des Temperaturmoduls vorzugsweise mindestens ein analoger Temperatursensor (z.B. Pt100, Pt1000) in den Prozess des Motormanagementsystems eingebunden werde. Auf diese Weise ist beispielsweise mittels des Motormanagementsystems eine Überwachung von Lager-, Getriebeöl- oder Kühlmitteltemperatur möglich.

Das Analogmodul umfasst mindestens einen analogen Ein- und/oder Ausgang. Auf diese Weise kann das Motormanagementsystem um den mindestens einen analogen Ein- und/oder Ausgang des Analogmoduls erweitert werden.

In einer weiteren vorteilhaften Ausführungsform der Erfindung ist das Datenpaket größer als 10 Byte. Bei Datenpakten, welche größer als 10 Byte sind, liegt ein größeres Datenpaket vor.

In einer weiteren vorteilhaften Ausführungsform der Erfindung wird das mindestens eine Steuerbit, welches das Übertragen des Datenpakets über die azyklische Datenübertragung zum ersten Erweiterungsmodul anzeigt, innerhalb eines Übertragungszyklus zwischen dem Basismodul und dem Erweiterungsmodul übertragen.

In einer weiteren vorteilhaften Ausführungsform der Erfindung wird innerhalb der zyklischen Datenübertragung das mindestens eine Steuerbit solange übertragen, bis die Übertragung des Datenpakets mittels der azyklischen Datenübertragung beendet ist.

Solange die Datenübertragung des Datenpakets über den azyklischen Kanal (UART oder I²C) erflogt, wird innerhalb des jeweiligen Zyklus der zyklischen Datenübertragung, d.h. über den zyklischen Kanal, stets das charakteristische mindestens eine Steuerbit übertragen,. Dem adressierten Erweiterungsmodul wird durch das charakteristische mindestens eine Steuerbit stets angezeigt, dass ihm ein Datenpaket über die azyklische Datenübertragung übertragen wird. Das charakteristische mindestens eine Steuerbit wird innerhalb des Zyklus der zyklischen Datenübertragung solange übertragen, bis das zu übertragende Datenpaket über die azyklische Datenübertragung übertragen wurde. Erst nachdem über die azyklische Datenübertragung das zu übertragende Datenpaket an das adressierte Erweiterungsmodul übertragen wurde, wird ein geändertes Steuerbit für das adressierte Erweiterungsmodul übertragen, so dass dieses erkennt, dass das Datenpakte vollständig übertagen wurde.

In einer weiteren vorteilhaften Ausführungsform der Erfindung erkennt das erste Erweiterungsmodul anhand des mindestens einen Steuerbits, dass das über die azyklische Datenübertragung übertragene Datenpaket für das erste Erweiterungsmodul bestimmt ist.

Das Motormanagementsystem kann mehrere Erweiterungsmodule umfassen. Jedes der Erweiterungsmodule, wie z.B. das erste Erweiterungsmodul, umfasst eine charakteristische Adresse. Mit dem mindestens einen Steuerbit können die einzelnen Erweiterungsmodule eindeutig andressiert werden, so dass anhand des mindestens einen Steuerbits eindeutig angezeigt werden kann, für welches Erweiterungsmodul, nämlich für das adressierte, das über die azyklische Datenübertragung übertragene Datenpaket bestimmt ist.

In einer weiteren vorteilhaften Ausführungsform der Erfindung zeigt das Basismodul mittels mindestens eines Steuerbits in der zyklischen Datenübertragung mit dem ersten Erweiterungsmodul dem ersten Erweiterungsmodul an, dass die azyklische Datenübertragung des Datenpakets beendet ist.

In einer weiteren vorteilhaften Ausführungsform der Erfindung zeigt zum Austausch eines Datenpakets vom ersten Erweiterungsmodul zum Basismodul das erste Erweiterungsmodul dem Basismodul mittels mindestens eines Steuerbits in der zyklischen Datenübertragung mit dem Basismodul dem Basismodul an, dass ein Datenpaket über die azyklische Datenübertragung zu dem Basismodul zu übertragen ist. Das Basismodul zeigt anschließend zum Austausch des Datenpakets vom ersten Erweiterungsmodul zum Basismodul mittels mindestens eines Steuerbits in der zyklischen Datenübertragung mit dem ersten Erweiterungsmodul dem ersten Erweiterungsmodul an, dass das Datenpaket über die azyklische Datenübertragung zum Basismodul übertragen werden kann. Anschließend überträgt das erste Erweiterungsmodul über die azyklische Datenübertragung das Datenpaket zum Basismodul.

Erweiterungsmodule die z.B. eine begrenzte Zeit mehr Daten übertragen müssen (z.B. Erweiterungsmodule, welche ein Display aufweisen oder mittels welchen eine Parametrierung des Motormanagementsystems erfolgt) bekommen Zugriff auf den azyklischen Übertragungskanal. Soll eine "Punkt zu Punkt" Verbindung zwischen dem Erweiterungsmodul und dem Basismodul aufgebaut werden, kann dies über das mindestens einen Steuerbit im zyklischen Protokoll vom Basismodul veranlasst oder auch vom Erweiterungsmodul angefragt werden.

In einer weiteren vorteilhaften Ausführungsform der Erfindung ist das erste Erweiterungsmodul unmittelbar, insbesondere mittels eines Flachbandkabels, mit dem Basismodul verbunden. Das System weist vorzugsweise ferner ein zweites Erweiterungsmodul auf, welches über das erste Erweiterungsmodul mit dem Basismodul verbunden ist. Das erste Erweiterungsmodul ist somit hinsichtlich des Systems keine Modul, welches am Ende des Kommunikationsstrangs angeordnet ist, sondern ein zwischengeschaltetes Modul, welches mit benachbarten Modulen desselben Kommunikationssystems (Basismodul, zweites Erweiterungsmodul) verbunden ist.

In einer weiteren vorteilhaften Ausführungsform der Erfindung liegt ein zweites Erweiterungsmodul vor, welches eine erste Systemschnittstelle, mit vier Pins als Serial Peripheral Interface und zwei Pins als UART Schnittstelle oder als Inter-Integrated Circuit Schnittstelle, umfasst, wobei das erste Erweiterungsmodul eine zweite Systemschnittstelle, mit vier Pins als Serial Peripheral Interface und zwei Pins als UART Schnittstelle oder als Inter-Integrated Circuit Schnittstelle, umfasst, wobei die zweite Systemschnittstelle des ersten Erweiterungsmoduls mit der ersten Systemschnittstelle des zweiten Erweiterungsmoduls verbunden ist und das Basismodul mittels mindestens eines Steuerbits dem zweiten Erweiterungsmodul anzeigt, dass ein Datenpaket über die azyklische Datenübertragung an das zweite Erweiterungsmodul übertragen wird.

Die Kommunikation vom Basismodul zum zweiten Erweiterungsmodul erfolgt über die kommunikative Verbindung der Module mit dem ersten Erweiterungsmodul.

Das vom Basismodul zum zweiten Erweiterungsmodul übertragene mindestens eine Steuerbit, welches eine Übertragung eines Datenpakets über die azyklische Datenübertragung charakterisiert, unterscheidet sich von dem mindestens einen Steuerbit, welches vom Basismodul zum ersten Erweiterungsmodul übertragen wurde.

Das zweite Erweiterungsmodul umfasst vorzugsweise ebenso zwei Systemschnittstellen.

In einer weiteren vorteilhaften Ausführungsform der Erfindung ist die Systemschnittstelle jeweils derart ausgebildet, dass die Pins der Systemschnittstelle (vier Pins des SCI und zwei Pins der UART oder I²C Schnittstelle) mittels lediglich einen Steckers kontaktiert werden.
In einer weiteren vorteilhaften Ausführungsform der Erfindung kann über die Systemschnittstelle eine Recheneinheit und/oder ein Speichermodul angeschlossen werden, so dass über die Systemschnittstelle eine Kommunikation mit der Recheneinheit und/oder dem Speichermodul erfolgen kann. Hierzu umfasst das Basismodul oder das Erweiterungsmodul vorzugsweise jeweils eine zweite Systemschnittstelle, welche analog zur ersten Systemschnittstelle ausgebildet ist.

Die Kommunikation mit weiteren Erweiterungsmodulen kann auf einfache Weise über die Systemschnittstelle des Basismoduls erfolgen. Über die Systemschnittstelle des Basismoduls kann vorzugsweise ebenso eine kommunikative Verbindung in Richtung einer Recheneinheit (z.B. PC, Laptop) oder eines Speichermoduls erfolgen.

In einer weiteren vorteilhaften Ausführungsform der Erfindung sind die Systemschnittstellen der einzelnen Module untereinander einheitlich ausgebildet, so dass sie mittels eines gleichen Steckers kontaktiert werden können.

In einer weiteren vorteilhaften Ausführungsform der Erfindung ist die Systemschnittstelle derart ausgebildet, dass das elektrische Anschließen eines Steckers mit der Systemschnittstelle mittels einer zerstörungsfrei lösbaren Rastverbindung erfolgt.

Im Folgenden werden die Erfindung und Ausgestaltungen der Erfindung anhand der in den Figuren dargestellten Ausführungsbeispiele näher beschrieben und erläutert. Es zeigen:
- FIG 1: Eine schematische Darstellung eines Motormanagementsystems mit einem Basismodul und einem ersten und zweiten Erweiterungsmodul, und
- FIG 2: eine schematische Darstellung einer Systemschnittstelle.

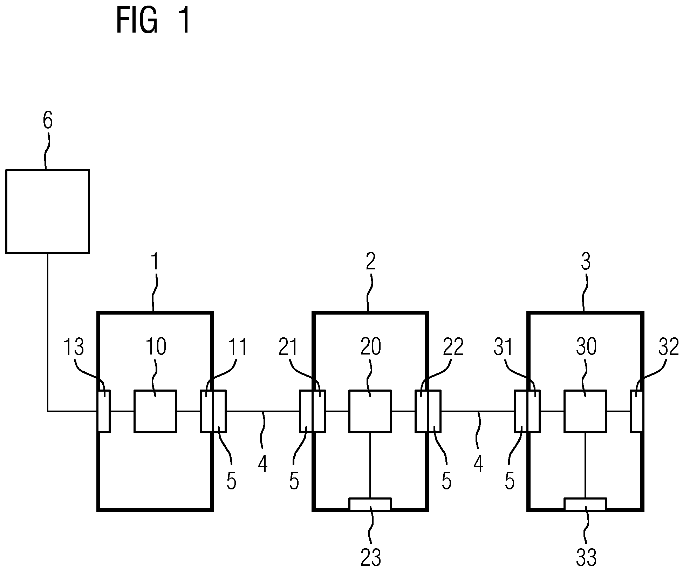

FIG 1 zeigt eine schematische Darstellung eines Motormanagementsystems mit einem Basismodul 1 und einem ersten und zweiten Erweiterungsmodul 2,3. Das Basismodul 1 umfasst eine erste Systemschnittstelle 11, eine Verarbeitungseinheit 10, welche ein Kommunikationsmittel umfasst, und eine PROFIBUS-Schnittstelle 13. Das erste Erweiterungsmodul 2 umfasst eine erste Systemschnittstelle 21, eine Verarbeitungseinheit 20, welche ein Kommunikationsmittel umfasst, eine zweite Systemschnittstelle 22 und analogen Ein- und Ausgänge 23, mittels welchen das Basismodul um Ein- und Ausgänge erweitert wird. Das zweite Erweiterungsmodul 3 umfasst eine erste Systemschnittstelle 31, eine Verarbeitungseinheit 30, welche ein Kommunikationsmittel umfasst, eine zweite Systemschnittstelle 32 und ein Anzeige- und Eingabeelement 33, mittels welchem ein eine Parametrierung und Diagnose des Motormanagementsystems (Basismodul 1 und die Erweiterungsmodule 2,3) ermöglicht wird.

Die ersten und zweiten Systemschnittstellen 11,21,31,22,32 sind jeweils gleich aufgebaut. Über die erste und zweite Systemschnittstelle 11,21,31,22,32 wird eine zyklische und azyklische Datenübertragung (Kommunikation) zwischen den Modulen 1,2,3 ermöglicht. Die erste und zweite Systemschnittstelle 11,21,31,22,32 umfasst hierfür jeweils 4 Pins, welche eine SPI bilden, und zwei Pins, welche eine UART Schnittstelle oder I²C Schnittstelle bilden. Über das SPI erfolgt eine zyklische Datenübertragung zwischen den Modulen 1,2,3. Über die UART Schnittstelle oder I²C Schnittstelle erfolgt eine azyklische Datenübertragung zwischen den Modulen 1,2,3.

Das Basismodul 1 ist über die PROFIBUS-Schnittstelle 13 mit einer Speicherprogrammierbaren Steuerung 6 verbunden und kann hierüber von der Speicherprogrammierbaren Steuerung 6 Steuerbefehle für das Motormanagementsystem empfangen. Die erste Systemschnittstelle 11 des Basismoduls ist mittels eines Flachbandkabels 4 mit der ersten Systemschnittstelle 21 des ersten Erweiterungsmoduls 2 verbunden und kann hierüber mit dem ersten Erweiterungsmodul 2 kommunizieren. Die zweite Systemschnittstelle 22 des ersten Erweiterungsmoduls 2 ist mittels eines weiteren Flachbandkabels 4 mit der ersten Systemschnittstelle 31 des zweiten Erweiterungsmoduls 3 verbunden. Durch die serielle Verschaltung der Module 1,2,3 kann das Basismodul 1 sowohl mit dem ersten Erweiterungsmodul 2 als auch mit dem zweiten Erweiterungsmodul 3 kommunizieren.

Das Flachbandkabel 4 umfasst jeweils zwei Stecker 5. Die Stecker 5 korrespondieren mit der ersten und zweiten Systemschnittstelle 11,21,31,22,32, so dass die Module 1,2,3 über das Flachbandkabel 4 miteinander verbunden werden können.

Soll nun das Basismodul 1 mit dem ersten Erweiterungsmodul 2 größere Datenmengen (d.h. ein Datenpaket, welches größer als 10 Byte ist) austauschen, wird das dem ersten Erweiterungsmodul 2 über das zyklische Protokoll der zyklischen Datenübertragung zwischen dem Basismodul 1 und dem ersten Erweiterungsmodul 2 vom Basismodul 1 mitgeteilt. Hierfür sendet das Basismodul 1 innerhalb des zyklischen Protokolls ein charakteristisches Steuerbyte zum ersten Erweiterungsmodul 2. Das charakteristische Steuerbyte signalisiert dem ersten Erweiterungsmodul 2, dass mittels der azyklischen Datenübertragung zum ersten Erweiterungsmodul 2 vom Basismodul 1 ein Datenpaket übertragen wird. Nach dem Senden des charakteristischen Steuerbytes wird eine Punkt zu Punkt Verbindung zwischen dem Basismodul 1 und dem ersten Erweiterungsmodul 2 über die azyklische Datenübertragung aufgebaut. Die zyklische Kommunikation zwischen dem Basismodul 1 und dem ersten und zweiten Erweiterungsmodul 2,3 bleibt hiervon unberührt. Der Datenaustausch zwischen dem Basismodul 1 und dem ersten Erweiterungsmodul 2 über die azyklische Datenübertragung findet solange auf der azyklischen Datenleitung, d.h. über die zwei Pins der UART oder I²C Schnittstelle der Systemschnittstelle 11,21 statt, bis dieser durch das Basismodul 1 geschlossen wird. Während des Übertragens des Datenpakets über die azyklische Datenleitung wird zwischen dem Basismodul 1 und dem ersten Erweiterungsmodul 2 stets das charakteristischen Steuerbyte gesendet. Erst nachdem das Datenpaket vollständig vom Basismodul 1 zum ersten Erweiterungsmodul 2 übertragen wurde, wird ein gegenüber dem charakteristischen Steuerbyte geändertes Steuerbyte über das zyklische Protokoll der zyklischen Datenübertragung zwischen dem Basismodul 1 und dem ersten Erweiterungsmodul 2 vom Basismodul 1 zum ersten Erweiterungsmodul 2 gesandt, so dass dieses erkennt, dass die Datenübertragung des Datenpakets über die azyklische Datenübertragung beendet ist. Auf diese Weise kann gezielt eine Übertragung größerer Datenmengen zwischen dem Basismodul 1 und den mit ihm verbundenen Erweiterungsmodulen 2,3 erfolgen, ohne dass die Zykluszeit der zyklischen Datenübertragung wesentlich verlängert werden muss. Zur Übertragung des Datenpakets über die azyklische Datenübertragung ist die Anordnung der Erweiterungsmodule 2,3 innerhalb des Motormanagementsystems unerheblich, da das Basismodul 1 innerhalb der zyklischen Datenübertragung gezielt das charakteristische Steuerbyte an das Erweiterungsmodul senden kann, an welches ein Datenpaket zu übertragen ist.

Möchte beispielswiese zu einem späteren Zeitpunkt das zweite Erweiterungsmodul 3 mit dem Basismodul 1 ein Datenpaket austauschen, so zeigt das zweite Erweiterungsmodul 3 dem Basismodul 1 mittels eines charakteristischen Steuerbytes in der zyklischen Datenübertragung mit dem Basismodul 1 dem Basismodul 1 an, dass ein Datenpaket über die azyklische Datenübertragung zum Basismodul 1 zu übertragen ist. Das Basismodul 1 baut anschließend, wie vorher beschrieben, die Punkt zu Punkt Verbindung zum zweiten Erweiterungsmodul 3 über die azyklische Datenübertragung auf. Hierfür sendet das Basismodul 1 innerhalb des zyklischen Protokolls ein charakteristisches Steuerbyte zum zweiten Erweiterungsmodul 3. Das charakteristische Steuerbyte signalisiert dem zweiten Erweiterungsmodul 3, dass mittels der azyklischen Datenübertragung zum zweiten Erweiterungsmodul 3 vom Basismodul 1 ein Datenpaket übertragen wird.

Wenn zwischen den Modulen 1,2,3 nicht nur zyklische Daten sondern auch etwas größere Datenpakten, wie z. B. Anlaufparameter, Bildschirmanzeigen oder Ähnliches, Übertragen werden müssen, ist durch das gezielte Einleiten der Übertragung von größeren Datenpaketen über die azyklische Datenübertragung mittels des charakteristischen Steuerbytes über das Telegramm der zyklischen Datenübertragung keine Einschränkung bei der Verwendung der Systemschnittstelle hinsichtlich der zyklischen Datenübertragung erforderlich. Bereits vorhandene Komponenten bleiben kompatibel. Der zyklische Dienst über die Systemschnittselle bleibt von der azyklischen Datenübertragung unbeeinflusst. Durch den Verzicht auf eine feste Datenbreite innerhalb der azyklischen Datenübertragung kann einen schnelleren Updatezyklus zwischen den Modulen 1,2,3 erreicht werden.

Die Größe des innerhalb des zyklischen Telegramms verwendeten charakteristischen Steuerbytes kann ebenso größer oder kleiner als 1 Byte sein.

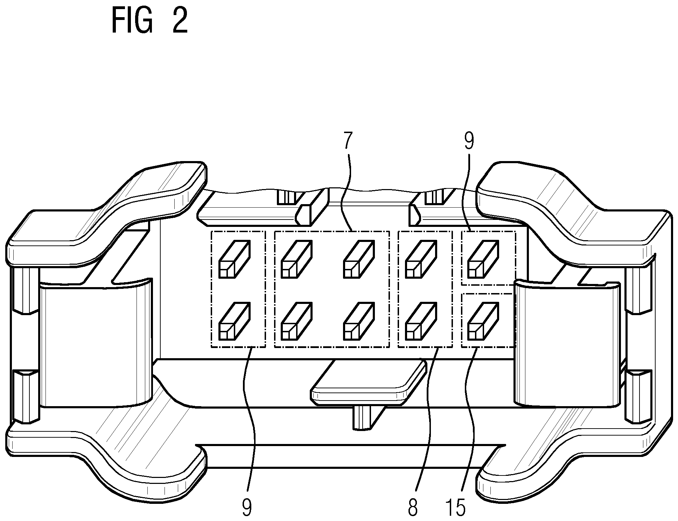

FIG 2 zeigt eine schematische Darstellung einer Systemschnittstelle. Die abgebildete Systemschnittstelle entspricht der ersten und/oder zweiten Systemschnittstelle 11,21,22,31, 32 des Basismoduls 1, ersten Erweiterungsmoduls 2 und zweiten Erweiterungsmoduls 3 des Motormanagementsystems der FIG 1. Bei der Systemschnittstelle sind drei Schnittstellen zu einer Gesamtschnittstelle zusammengefasst. Vier Pins 7 der Systemschnittstelle realisieren das Serial Peripheral Interface (kurz: SPI) mittels welchen die zyklische Datenübertragung zwischen den Modulen erfolgt. Zwei Pins 8 der Systemschnittstelle realisieren die UART und/oder I²C Schnittstelle mittels welchen die azyklische Datenübertragung zwischen den Modulen erfolgt. Über drei Pins 9 der Systemschnittstelle erfolgt die Spannungsversorgung der mit dem Basismodul gekoppelten Erweiterungsmodule (DC 5 Volt oder DC 24 Volt). Ein weiterer Pin 15 der Systemschnittstelle ist optional.

Die Systemschnittstelle der einzelnen Module kann mit einem Stecker eines Flachbandkabels mechanisch gekoppelt werden, so dass eine elektrische Kontaktierung der einzelnen Pins, insbesondere der vier, drei und zwei Pins 7,8,9, zum Stecker des Flachbandkabels und hierüber zwischen den erwünschten Modulen erfolgen kann.

## Patentansprüche

1. Verfahren zur seriellen Datenübertragung zwischen einem Basismodul (1) und einem ersten Erweiterungsmodul (2), wobei das Basismodul (1) und das erste Erweiterungsmodul (2) jeweils eine erste Systemschnittstelle (11,21), welche vier Pins (7) als Serial Peripheral Interface und zwei Pins (8) als UART Schnittstelle oder als I²C Schnittstelle aufweist, umfasst, **dadurch gekennzeichnet, dass**
die erste Systemschnittstelle (11) des Basismoduls (1) mit der ersten Systemschnittstelle (21) des Erweiterungsmoduls (2) verbunden ist und die Datenübertragung zwischen dem Basismodul (1) und dem ersten Erweiterungsmodul (2) über das Serial Peripheral Interface eine zyklische Datenübertragung und über die UART Schnittstelle oder I²C Schnittstelle eine azyklische Datenübertragung ist, wobei zum Austausch eines Datenpakets vom Basismodul (1) zum ersten Erweiterungsmodul (2) das Basismodul (1) mittels mindestens eines Steuerbits in der zyklischen Datenübertragung mit dem ersten Erweiterungsmodul (2) dem ersten Erweiterungsmodul (2) anzeigt, dass über die azyklische Datenübertragung ein Datenpaket zum ersten Erweiterungsmodul (2) übertragen wird, und anschließend das Datenpaket über die azyklische Datenübertragung zum ersten Erweiterungsmodul (2) überträgt.

2. Verfahren nach Anspruch 1, wobei das Datenpaket größer als 10 Byte ist.

3. Verfahren nach einem der vorhergehenden Ansprüche, wobei das mindestens eine Steuerbit, welches das Übertragen des Datenpakets über die azyklische Datenübertragung zum ersten Erweiterungsmodul (2) anzeigt, innerhalb eines Übertragungszyklus zwischen dem Basismodul (1) und dem ersten Erweiterungsmodul (2) übertragen wird.

4. Verfahren nach einem der vorhergehenden Ansprüche, wobei innerhalb der zyklischen Datenübertragung das mindestens eine Steuerbit solange übertragen wird, bis die Übertragung des Datenpakets mittels der azyklischen Datenübertragung beendet ist.

5. Verfahren nach einem der vorhergehenden Ansprüche, wobei das erste Erweiterungsmodul (2) anhand des mindestens einen Steuerbits erkennt, dass das über die azyklische Datenübertragung übertragene Datenpaket für das erste Erweiterungsmodul (2) bestimmt ist.

6. Verfahren nach einem der vorhergehenden Ansprüche, wobei das Basismodul (1) mittels mindestens eines Steuerbits in der zyklischen Datenübertragung mit dem ersten Erweiterungsmodul (2) dem ersten Erweiterungsmodul (2) anzeigt, dass die azyklische Datenübertragung des Datenpakets beendet ist.

7. Verfahren nach einem der vorhergehenden Ansprüche, wobei zum Austausch eines Datenpakets vom ersten Erweiterungsmodul (2) zum Basismodul (1) das erste Erweiterungsmodul (2) dem Basismodul (1) mittels mindestens eines Steuerbits in der zyklischen Datenübertragung mit dem Basismodul (1) dem Basismodul (1) anzeigt, dass ein Datenpaket über die azyklische Datenübertragung zum Basismodul (1) zu übertragen ist, und das Basismodul (1) anschließend zum Austausch des Datenpakets vom ersten Erweiterungsmodul (2) zum Basismodul (1) mittels mindestens eines Steuerbits in der zyklischen Datenübertragung mit dem ersten Erweiterungsmodul (2) dem ersten Erweiterungsmodul (2) anzeigt, dass das Datenpaket über die azyklische Datenübertragung zum Basismodul (1) übertragen werden kann, und anschließend das erste Erweiterungsmodul (2) über die azyklische Datenübertragung das Datenpaket zum Basismodul (1) überträgt.

8. Verfahren nach einem der vorhergehenden Ansprüche, mit einem zweiten Erweiterungsmodul (3), welches eine erste Systemschnittstelle (31), mit vier Pins (7) als Serial Peripheral Interface und zwei Pins (8) als UART Schnittstelle oder als I²C Schnittstelle, umfasst, wobei das erste Erweiterungsmodul (2) eine zweite Systemschnittstelle (22), mit vier Pins (7) als Serial Peripheral Interface und zwei Pins (8) als UART Schnittstelle oder als I²C Schnittstelle, umfasst, wobei die zweite Systemschnittstelle (22) des ersten Erweiterungsmoduls (2) mit der ersten Systemschnittstelle (31) des zweiten Erweiterungsmoduls (3) verbunden ist und das Basismodul (1) mittels eines geänderten mindestens einen Steuerbits dem zweiten Erweiterungsmodul (3) anzeigt, dass ein Datenpaket über die azyklische Datenübertragung an das zweite Erweiterungsmodul (3) übertragen wird.

9. Verfahren nach einem der vorhergehenden Ansprüche, wobei die Systemschnittstelle (11,21,22,31,32) jeweils derart ausgebildet ist, dass die Pins (7,8,9,15) der Systemschnittstelle mittels lediglich einen Steckers (5) kontaktiert werden.

10. System zur Durchführung eines Verfahrens nach einem der vorhergehenden Ansprüche, wobei das System das Basismodul (1) und das erste Erweiterungsmodul (2) umfasst.

## Claims

1. Method for serial data transmission between a basic module (1) and a first expansion module (2), wherein the basic module (1) and the first expansion module (2) each comprise a first system interface (11, 21), which has four pins (7) as a serial peripheral interface and two pins (8) as a UART interface or as an I²C interface,
**characterised in that**
the first system interface (11) of the basic module (1) is connected to the first system interface (21) of the expansion module (2) and the data transmission between the basic module (1) and the first expansion module (2) via the serial peripheral interface is a cyclical data transmission and via the UART interface or I²C interface is an acyclical data transmission, wherein to exchange a data packet from the basic module (1) to the first expansion module (2) the basic module (1) indicates to the first expansion module (2) by means of at least one control bit in the cyclical data transmission with the first expansion module (2) that a data packet is transmitted via the acyclical data transmission to the first expansion module (2) and the data packet is then transmitted via the acyclical data transmission to the first expansion module (2).

2. Method according to claim 1, wherein the data packet is larger than 10 bytes.

3. Method according to one of the preceding claims, wherein the at least one control bit, which indicates the transmission of the data packet via the acyclical data transmission to the first expansion module, is transmitted within a transmission cycle between the basic module (1) and the first expansion module (2).

4. Method according to one of the preceding claims, wherein within the cyclical data transmission the at least one control bit is transmitted until the transmission of the data packet by means of the acyclical data transmission is ended.

5. Method according to one of the preceding claims, wherein the first expansion module (2) identifies on the basis of the at least one control bit that the data packet transmitted via the acyclical data transmission is determined for the first expansion module (2).

6. Method according to one of the preceding claims, wherein the basic module (1) indicates to the first expansion module (2) by means of at least one control bit in the cyclical data transmission with the first expansion module (2) that the acyclical data transmission of the data packet is ended.

7. Method according to one of the preceding claims, wherein to exchange a data packet from the first expansion module (2) to the basic module (1) the first expansion module (2) indicates to the basic module (1) by means of at least one control bit in the cyclical data transmission with the basic module (1) that a data packet is transmitted via the acyclical data transmission to the basic module (1) and for exchanging the data packet from the first expansion module (2) to the basic module (1) by means of at least one control bit in the cyclical data transmission with the first expansion module (2) the basic module (1) then indicates to the first expansion module (2) that the data packet can be transmitted via the acyclical data transmission to the basic module (1) and the first expansion module (2) then transmits the data packet via the acyclical data transmission to the basic module (1).

8. Method according to one of the preceding claims, with a second expansion module (3), which comprises a first system interface (31), with four pins (7) as a serial peripheral interface and two pins (8) as a UART interface or as a an I²C interface, wherein the first expansion module (2) comprises a second system interface (22), with four pins (7) as a serial peripheral interface and two pins (8) as a UART interface or as an I²C interface, wherein the second system interface (22) of the first expansion module (2) is connected to the first system interface (31) of the second expansion module (3) and the basic module (1) indicates to the second expansion module by means of a modified at least one control bit that a data packet is transmitted via the acyclical data transmission to the second expansion module (3).

9. Method according to one of the preceding claims, wherein each system interface (11, 21, 22, 31, 32) is embodied such that the pins (7,8,9,15) of the system interface are contacted by means of only one plug (5).

10. System for carrying out a method according to one of the preceding claims, wherein the system comprises the basic module (1) and the first expansion module (2).

## Revendications

1. Procédé de transmission de données en série entre un module ( 1 ) de base et un premier module ( 2 ) d'extension, le module ( 1 ) de base et le premier module ( 2 ) d'extension comprenant chacun une première interface ( 11, 21 ) de système, qui a quatre broches ( 7 ) comme Serial Peripheral Interface et deux broches ( 8 ) comme interface UART ou comme interface I²C, **caractérisé en ce que**
la première interface ( 11 ) de système du module ( 1 ) de base est reliée à la première interface ( 21 ) de système du module ( 2 ) d'extension et la transmission de données entre le module ( 1 ) de base et le premier module ( 2 ) d'extension, par la Serial Peripheral Interface, est une transmission de données cyclique et, par l'interface UART ou l'interface I²C, une transmission de données acyclique, dans lequel, pour échanger un paquet de données du module ( 1 ) de base au premier module ( 2 ) d'extension, le module ( 1 ) de base indique au premier module ( 2 ) d'extension, au moyen d'au moins un bit de commande dans la transmission de données cyclique avec le premier module ( 2 ) d'extension, que par la transmission de données acyclique, un paquet de données est transmis au premier module ( 2 ) d'extension et, ensuite, transmet le paquet de données au premier module ( 2 ) d'extension par la transmission de données acyclique.

2. Procédé suivant la revendication 1, dans lequel le paquet de données est plus grand que 10 octets.

3. Procédé suivant l'une des revendications précédentes, dans lequel le au moins un bit de commande, qui indique au premier module ( 2 ) d'extension la transmission du paquet de données par la transmission de données acyclique, est transmis dans un cycle de transmission entre le module ( 1 ) de base et le premier module ( 2 ) d'extension.

4. Procédé suivant l'une des revendications précédentes, dans lequel, à l'intérieur de la transmission de données cyclique, le au moins un bit de commande est transmis jusqu'à ce que la transmission du paquet de données, au moyen de la transmission de données acyclique, soit achevée.

5. Procédé suivant l'une des revendications précédentes, dans lequel le premier module ( 2 ) d'extension détecte, à l'aide du au moins un bit de commande, que le paquet de données transmis par la transmission de données acyclique est destiné au premier module ( 2 ) d'extension.

6. Procédé suivant l'une des revendications précédentes, dans lequel le module ( 1 ) de base indique au premier module ( 2 ) d'extension, au moyen d'au moins un bit de commande dans la transmission de données cyclique avec le premier module ( 2 ) d'extension, que la transmission de données acyclique du paquet de données est achevée.

7. Procédé suivant l'une des revendications précédentes, dans lequel, pour échanger un paquet de données du premier module ( 2 ) d'extension au module ( 1 ) de base, le premier module ( 2 ) d'extension indique au module ( 1 ) de base, au moyen d'au moins un bit de commande dans la transmission de données cyclique avec le module ( 1 ) de base, qu'un paquet de données doit être transmis au module ( 1 ) de base par la transmission de données acyclique et, ensuite, le module ( 1 ) de base indique au premier module ( 2 ) d'extension, pour l'échange du paquet de données du premier module ( 2 ) d'extension au module ( 1 ) de base, au moyen d'au moins un bit de commande dans la transmission de données cyclique avec le premier module ( 2 ) d'extension, que le paquet de données peut être transmis au module ( 1 ) de base par la transmission de données acyclique et, ensuite, le premier module ( 2 ) d'extension transmet au module de base le paquet par la transmission de données acyclique.

8. Procédé suivant l'une des revendications précédentes, comprenant un deuxième module ( 3 ) d'extension, qui comprend une première interface ( 31 ) de système ayant quatre broches ( 7 ) comme Serial Peripheral Interface et deux broches ( 8 ) comme interface UART ou comme interface I²C, le premier module ( 2 ) d'extension comprenant une deuxième interface ( 22 ) de système ayant quatre broches ( 7 ) comme Serial Peripheral Interface et deux broches ( 8 ) comme interface UART ou comme interface I²C, la deuxième interface ( 22 ) de système du premier module ( 2 ) d'extension étant reliée à la première interface ( 31 ) de système du deuxième module ( 3 ) d'extension et le module ( 1 ) de base indique au deuxième module ( 3 ) d'extension, au moyen d'au moins un bit de commande modifié, qu'un paquet de données est transmis au deuxième module ( 3 ) d'extension, par la transmission de données acyclique.

9. Procédé suivant l'une des revendications précédentes, dans lequel l'interface ( 11, 21, 22, 31, 32 ) de système est constituée de manière à ce que les broches ( 7, 8, 9, 15 ) de l'interface de système soient contactées au moyen de seulement un connecteur ( 5 ).

10. Système pour effectuer un procédé suivant l'une des revendications précédentes, dans lequel le système comprend le module ( 1 ) de base et le premier module ( 2 ) d'extension.
